# EUROPÄISCHE PATENTANMELDUNG

(11) **EP 4 807 950 A1**
(43) Veröffentlichungstag der Anmeldung: **16.09.2026**
(21) Anmeldenummer: 25162948.1
(22) Anmeldetag: 11.03.2025
(51) Int. Cl.: H02K 3/28, H02K 3/52, H02K 7/14, H02K 11/33

(54) **ELEKTROMOTOR UND WERKZEUGMASCHINE**

(71) Anmelder: Hilti Aktiengesellschaft, 9494 Schaan (LI)
(72) Erfinder: Asmus, Torsten, 87600 Kaufbeuren (DE)
(74) Vertreter: Hilti Aktiengesellschaft Corporate Intellectual Property

(57) **Zusammenfassung**

Die vorliegende Erfindung betrifft einen Elektromotor (9), insbesondere für eine Werkzeugmaschine (1), wobei der Elektromotor (9) einen Stator (16) und einen um eine Drehachse (31) drehbaren Rotor (17) aufweist, wobei der Stator (16) eine erste und eine zweite Stirnseite (16a, 16b) und mehrere Polzähne (25) aufweist, wobei jeder der Polzähne (25) dazu ausgebildet ist, zumindest eine erste Wicklung (19) zur Bildung einer ersten Spule (26) und zumindest eine zweite Wicklung (20) zur Bildung einer zweiten Spule (26) aufzunehmen, wobei zumindest ein erstes Kontaktierungselement (24a) zum Kontaktieren der zumindest einen ersten Wicklung (19) und zumindest ein zweites Kontaktierungselement (24b) zum Kontaktieren der zumindest einen zweiten Wicklung (20) vorgesehen ist, wobei das zumindest eine erste Kontaktierungselement (24a) und das zumindest eine zweite Kontaktierungselement (24b) separat voneinander an dem Stator (16) angeordnet sind.

## Beschreibung

Die Erfindungsmeldung betrifft einen Elektromotor, insbesondere für eine Werkzeugmaschine, wobei der Elektromotor einen um eine Drehachse drehbar angeordneten Rotor und einen Stator mit einer Reihe von zahnförmigen Abschnitten aufweist. Weiterhin betrifft die Erfindung eine Werkzeugmaschine mit einem solchen Elektromotor

### Hintergrund der Erfindung:

Statoren sind Komponenten bzw. Bauteile von Elektromotoren, die eine Reihe von zahnförmigen Abschnitten aufweisen, welche sich radial um die Drehachse eines Rotors angeordnet nach innen oder außen erstrecken und entlang der Drehachse durch zwei gegenüberliegende Stirnflächen begrenzt werden. Zwischen jeweils benachbarten zahnförmigen Abschnitten werden nutartige Räume und schlitzartige Öffnungen zur Aufnahme von Wicklungen aus elektrisch leitenden Drähten bereitgestellt, wobei die Wicklungen derart ausgeprägt sind, dass elektrische Spulen um die zahnförmigen Abschnitte gebildet werden.

Der maximale Querschnitt des zu wickelnden elektrisch leitenden Drahtes wird im Wesentlichen durch die Breite der schlitzartigen Öffnung und das zum Einsatz kommende Wickelverfahren limitiert, wodurch dem Einsatzbereich hinsichtlich Drehzahl des Rotors bzw. Leistung Grenzen gesetzt sind. Zum Zweck der Erweiterung dieser Grenzen ist es üblich, Wicklungen mehrfach auszuführen, wobei mindestens ein weiterer elektrisch leitender Draht gleichzeitig oder aufeinander folgend in die gleiche Position eingebracht wird und die gebildeten Spulen anschließend parallel oder in Reihe verschaltet werden, sodass sich der effektive Leiterquerschnitt einer Spule entsprechend der Anzahl der parallelen Einzelleiter vervielfacht bzw. die effektive Wicklungszahl der Spule vervielfacht.

Üblicherweise kommen alle Drahtenden und verbindenden Drahtschlaufen der Wicklungen im Bereich derselben Stirnfläche des Stators zu liegen und werden dort in gemeinsame Verbindungs- bzw. Kontaktierungselemente gemäß einem vorgegebenen Schema zusammengeführt und elektrisch miteinander verbunden.

Zur elektrischen Verbindung der Drahtenden bzw. der Drahtschlaufen von mehrfach ausgeführten Wicklungen ist es bekannt, spezielle Verbindungsbauteile bereitzustellen, deren Kontaktflächen zur Aufnahme der durch die mehrfach ausgeführten Wicklungen auftretenden zusätzlichen Drähte entsprechend angepasst werden müssen, wodurch sie sich nicht mehr zur Verwendung bei einfach ausgeführten Wicklungen eignen.

Dadurch können sich zwischen Statoren mit einfach und mehrfach ausgeführten Wicklung Unterschiede im Fertigungsprozess bzw. in den Fertigungsparametern ergeben. Insbesondere können bei mehrfach ausgeführten Wicklungen teilweise kompliziert geführte Drahtenden bzw. Drahtschlaufen notwendig sein, um eine gewünschte Verschaltung zu erreichen, die zu einer Vergrößerung des Bauraums führen kann. Des Weiteren kann es notwendig sein, sofern die Verbindungs- bzw. Kontaktierungselemente zusätzlich Stromschienen zur Bildung einer Spulenverschaltung umfassen, die Querschnitte der Stromschienen bei mehrfach ausgeführten Wicklungen an den vergrößerten effektiven Leiterquerschnitt einer Spule anzupassen, was ebenfalls eine Vergrößerung des Bauraums zur Folge haben kann.

Die Aufgabe, die der vorliegenden Erfindung zugrunde liegt, besteht darin, einen Elektromotor bereitzustellen, der mit einem minimalen Einfluss auf den erforderlichen Bauraum sowohl mit einer einfach ausgeführten Wicklung als auch mit mehrfach ausgeführten Wicklungen gebildet werden kann.

Die Aufgabe wird gelöst durch den Gegenstand der unabhängigen Ansprüche. Vorteilhafte Ausführungsformen zu dem Gegenstand der unabhängigen Ansprüche finden sich in den abhängigen Ansprüchen.

### Beschreibung der Erfindung:

Gemäß einem ersten Aspekt wird ein Elektromotor, insbesondere für eine Werkzeugmaschine, vorgeschlagen. Der Elektromotor weist einen Stator und einen um eine Drehachse drehbaren Rotor auf. Dabei hat der Stator eine erste und eine zweite Stirnseite und mehrere zahnförmige Abschnitte oder Polzähne, wobei jeder der Polzähne dazu ausgebildet ist, zumindest eine erste Wicklung zur Bildung einer ersten Spule und zumindest eine zweite Wicklung zur Bildung einer zweiten Spule aufzunehmen. Insbesondere können die erste Wicklung und die zweite Wicklung aus Draht gebildet sein.

Der Elektromotor kann als ein Innenläufer, bei dem der Rotor in einer Öffnung des Stators angeordnet ist, oder als ein Außenläufer, bei dem Stator in einer Öffnung des Rotors angeordnet ist, ausgebildet sein.

Um den Elektromotor mit einem minimalen Einfluss auf den erforderlichen Bauraum sowohl mit einer einfach ausgeführten Wicklung als auch mit mehrfach ausgeführten Wicklungen bilden zu können, ist zumindest ein erstes Kontaktierungselement zum Kontaktieren der ersten Wicklung und zumindest ein zweites Kontaktierungselement zum Kontaktieren der zweiten Wicklung vorgesehen, wobei das zumindest eine erste Kontaktierungselement und das zumindest eine zweite Kontaktierungselement separat voneinander an dem Stator angeordnet sind. Dies ermöglicht weiterhin, die Anzahl der Bauteile, die sowohl bei einfach als auch mehrfach ausgeführten Wicklungen eingesetzt werden können, wie zum Beispiel Kontaktierungselemente, Stromschienen, etc., zu erhöhen und auch wesentliche Parameter im Fertigungsprozess, wie zum Beispiel Arbeitsschritte zur elektrischen Kontaktierung, Kräfte zum Verpressen der verschiedenen Elemente, Ströme und/oder Haltezeiten beim Heiß-Verpressen bzw. die Elektroden-Geometrien für das Heiß-Verpressen, etc. beizubehalten. Folglich kann der Stator mit im Wesentlichen gleichen Bauteilen und/oder Fertigungsprozessen mit einer einfachen Wicklung als auch mit mehrfachen Wicklungen hergestellt werden.

Insbesondere kann das zumindest eine erste Kontaktierungselement dazu ausgebildet sein, die einen die erste Wicklung bildenden Draht bzw. eine die erste Wicklung bildende Drahtschlauf elektrisch zu kontaktieren. Analog kann das zumindest eine zweite Kontaktierungselement dazu ausgebildet sein, einen die zweite Wicklung bildenden Draht bzw. eine die zweite Wicklung bildende Drahtschlauf elektrisch zu kontaktieren. Draüber hinaus können das zumindest eine erste Kontaktierungselement und/oder das zumindest eine zweite Kontaktierungselement dazu ausgebildet sein, mit einem weiteren Element direkt oder indirekt, d.h. über eine weitere Komponente, elektrisch und/oder mechanisch verbunden zu sein.

Beispielsweise kann das zumindest eine erste Kontaktierungselement im Bereich der ersten Stirnseite des Stators angeordnet sein und das zumindest eine zweite Kontaktierungselement kann im Bereich der zweiten Stirnseite des Stators angeordnet sein.

Bevorzugt kann das zumindest eine erste Kontaktierungselement und/oder das zumindest eine zweite Kontaktierungselement an einer Mantelfläche des Stators angeordnet sein. Zum Beispiel kann das zumindest eine erste Kontaktierungselement und/oder das zumindest eine zweite Kontaktierungselement im Falle eine Innenläufers an einer äußeren Mantelfläche des Stators und im Falle eines Außenläufers an einer inneren Mantelfläche des Stators angeordnet sein.

Gemäß einer weiteren Ausführungsform kann das zumindest eine erste Kontaktierungselement und das zumindest eine zweite Kontaktierungselement in einer axialen Richtung des Stators derart einander gegenüberliegend angeordnet sein, dass sie sich an umfänglich entsprechenden Positionen befinden. Mit anderen Worten können das zumindest eine erste Kontaktierungselement und das zumindest eine zweite Kontaktierungselement in einer axialen Richtung in einer geraden, parallel zu Drehachse verlaufenden Linie verbunden werden.

Weiterhin können die erste Wicklung und/oder die zweite Wicklung durch einen einzelnen zusammenhängenden elektrisch leitenden Draht gebildet sein.

Besonders vorteilhafterweise kann der Draht derart verlegt werden, dass sich nach Kontaktierung mit dem zumindest einen ersten Kontaktierungselement und/oder dem zumindest einen zweiten Kontaktierungselement eine gewünschte Verschaltung der Spulen ohne Zuhilfenahme zusätzlicher Stromschienen bewerkstelligen lässt.

Gemäß einer weiteren Ausführungsform kann die erste Wicklung ein erstes Wickelschema und die zweite Wicklung ein zweites Wickelschema aufweisen, wobei das erste Wickelschema gleich oder verschieden zum zweiten Wickelschema ist. Beispielsweise kann das zweite Wickelschema der zweiten Wicklung gegenüber dem ersten Wickelschema der ersten Wicklung derart verändert sein, dass das zumindest eine erste Kontaktierungselement für die ersten Wicklung auf kürzestem Weg in Längsrichtung parallel zur Drehachse mit dem entsprechend direkt gegenüberliegenden zumindest einen zweiten Kontaktierungselement der zweiten Wicklung elektrisch verbunden werden kann.

Des Weiteren kann das zumindest eine erste Kontaktierungselement mittels eines ersten Verbindungselements elektrisch mit einer ersten Leistungselektronik verbunden sein und/oder das zumindest eine zweite Kontaktierungselement kann mittels eines zweiten Verbindungselements elektrisch mit einer zweiten Leistungselektronik verbunden sein. Beispielsweise kann das zumindest eine erste Kontaktierungselement der ersten Wicklung mittels Litzen mit der ersten Leistungselektronik elektrisch verbunden und/oder das zumindest eine zweite Kontaktierungselement der zweiten Wicklung kann mittels weiterer oder separater Litzen mit derselben oder einer weiteren Leistungselektronik elektrisch verbunden sein. Insbesondere können die erste und die zweite Leistungselektronik gleich oder verschieden sein.

Gemäß einer weiteren Ausführungsform können das zumindest eine erste Kontaktierungselement und das zumindest eine zweite Kontaktierungselement elektrisch derart miteinander verbunden sein, dass sich eine elektrische Parallelschaltung der ersten Spule mit der zweiten Spule oder eine elektrische Serienschaltung der ersten Spule mit der zweiten Spule ergibt. Insbesondere kann das Schaltelement dazu eingerichtet sein, zwischen eine Parallelschaltung und einer Serienschaltung der ersten und zweiten Spule umzuschalten. Dies kann je nach Schaltzustand ermöglichen, einen effektiven Leiterquerschnitt der ersten und zweiten Spule bei gleichbleibender effektiver Windungszahl zu verdoppeln oder eine effektive Windungszahl der ersten und zweiten Spule bei gleichbleibendem effektiven Leiterquerschnitt zu verdoppeln.

Gemäß einem weiteren Aspekt wird eine Werkzeugmaschine mit einem voranstehend beschriebenen Elektromotor vorgeschlagen.

Insbesondere kann die Werkzeugmaschine lösbar mit einer Energieversorgungsvorrichtung verbindbar sein, wobei die Energieversorgungsvorrichtung dazu eingerichtet ist, die Werkzeugmaschine mit elektrischer Energie zu versorgen.

Weitere Vorteile ergeben sich aus der folgenden Figurenbeschreibung. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert.

Es zeigen:
Figur 1 eine schematische Schnittzeichnung durch eine bevorzugte Ausgestaltung einer Werkzeugmaschine mit einem Elektromotor gemäß einer ersten Ausführungsform,
Figur 2 eine schematische Detailschnittzeichnung durch eine bevorzugte Ausgestaltung eines Stators des Elektromotors gemäß der ersten Ausführungsform,
Figur 3 eine schematische Seitenansicht des Stators des Elektromotors gemäß der ersten Ausführungsform,
Figur 4 eine schematische Schnittansicht entlang der Linie IV-IV in der Fig. 3,
Figur 5 eine schematische Schnittansicht entlang der Linie V-V in der Fig. 3,
Figur 6 eine schematische Seitenansicht des Stators des Elektromotors gemäß einer zweiten Ausführungsform,
Figur 7 eine schematische Seitenansicht des Stators des Elektromotors gemäß einer dritten Ausführungsform, und
Figur 8 eine schematische Seitenansicht des Stators des Elektromotors gemäß einer vierten Ausführungsform.

### Ausführungsbeispiele und Figurenbeschreibung:

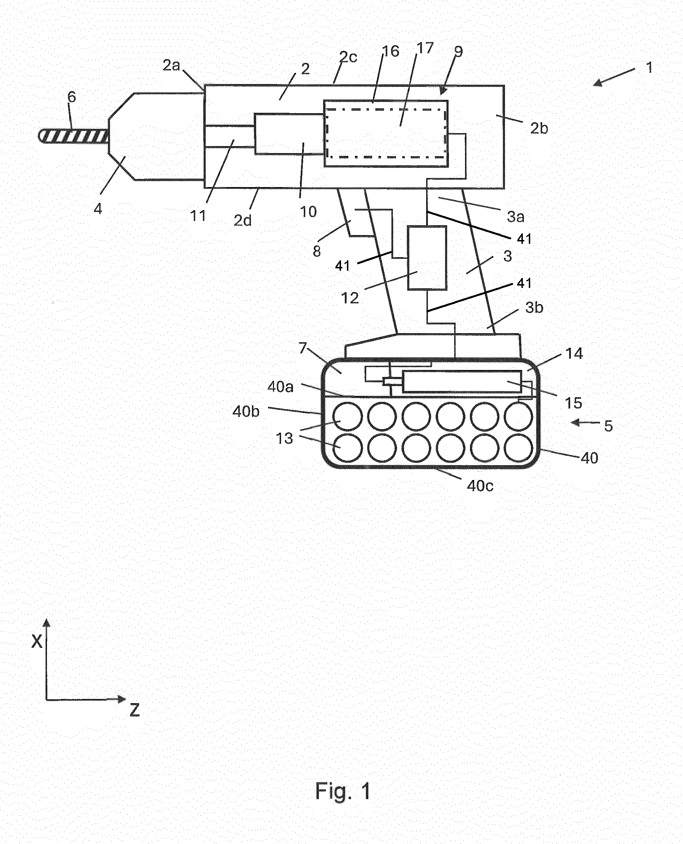

Figur 1 zeigt eine Werkzeugmaschine 1 gemäß einer beispielhaften Ausführungsform. Die Werkzeugmaschine 1 ist in Form einer akkubetriebenen Bohrmaschine ausgestaltet.

Gemäß einem alternativen Ausführungsbeispiel kann die Werkzeugmaschine auch in Form einer Säge, eines Schleifgeräts, eines Bohrhammers oder dergleichen ausgestaltet sein.

Die als Bohrmaschine ausgestaltete Werkzeugmaschine 1 enthält dabei im Wesentlichen ein Gehäuse 2, einen Handgriff 3, eine Werkzeugaufnahme 4 und eine Energieversorgung 5.

Das Gehäuse 2 weist ein vorderes Ende 2a, ein hinteres Ende 2b, ein oberes Ende 2c und ein unteres Ende 2d auf.

An dem vorderen Ende 2a des Gehäuses 2 ist die Werkzeugaufnahme 4 positioniert. Die Werkzeugaufnahme 4 dient zum Aufnehmen und Halten eines Werkzeugs 6.

In dem vorliegenden Ausführungsbeispiel ist das Werkzeug 6 in Form eines Bohrers ausgestaltet. An dem unteren Ende 2d des Gehäuses 2 ist ein erstes Ende 3a des Handgriffs 3 positioniert. An dem zweiten Ende 3b des Handgriffs 3 ist eine Akku-Schnittstelle 7 vorgesehen.

Wie in Figur 1 gezeigt weist der Handgriff 3 einen Aktivierungsschalter 8 auf, mit dem die Werkzeugmaschine 1 in einen Aktivierungszustand oder Deaktivierungszustand eingestellt werden kann.

An die Akku-Schnittstelle 7 kann die Energieversorgung 5 wiederlösbar befestigt werden. In dem vorliegenden Ausführungsbeispiel ist die Energieversorgung 5 in Form eines Akkumulators ausgestaltet. Die Energieversorgung 5 dient zum Versorgen der Werkzeugmaschine mit elektrischer Energie.

Entsprechend einem alternativen Ausführungsbeispiel kann die Energieversorgung 5 auch als Stromkabel zum Verbinden der Werkzeugmaschine 1 mit einer Netzstromquelle (Steckdose) ausgestaltet sein. Die als Stromkabel ausgestaltete Energieversorgung 5 ist in den Figuren nicht dargestellt.

Im Inneren des Gehäuses 2 ist im Wesentlichen ein Antrieb 9, eine Getriebevorrichtung 10, eine Antriebswelle 11 und eine Steuerungseinrichtung 12 positioniert.

Der Antrieb 9, die Getriebevorrichtung 10, die Antriebswelle 11 und die Werkzeugaufnahme 4 sind dabei so im Inneren des Gehäuses 2 zueinander angeordnet, dass ein in dem Antrieb 9 erzeugtes Drehmoment auf die Getriebevorrichtung 10, die Antriebswelle 11 und schließlich auf die Werkzeugaufnahme 4 bzw. auf das Werkzeug 6 übertragen werden kann.

Die Steuerungseinrichtung 12 ist mittels entsprechenden Leitungen 41 mit dem Aktivierungsschalter 8, der Akku-Schnittstelle 7 und dem Antrieb 9 verbunden.

Die als Akkumulator ausgestaltete Energieversorgung 5 kann mit der Werkzeugmaschine 1 wiederlösbar verbunden werden, um die Werkzeugmaschine 1 mit elektrischer Energie zu versorgen. Der Akkumulator 5 enthält im Wesentlichen ein Akku-Gehäuse 40, eine Anzahl an Energiespeicherzellen 13, eine Akku-Schnittstelle 14 sowie eine Steuerungseinrichtung 15.

Die Energiespeicherzellen 13 können auch als Akku-Zellen bezeichnet werden und sind im Inneren des Akku-Gehäuses 40 angeordnet.

Das Akku-Gehäuse 40 enthält dabei im Wesentlichen ein Deckelelement 40a, vier Seitenwände 40b und ein Bodenelement 40c.

Die Akku-Schnittstelle 14 ist an der Außenseite des Deckelelements 40a angeordnet und dient zum elektrischen bzw. elektronischen sowie mechanischen Verbinden des Akkumulators 5 mit der Werkzeugmaschine 1 oder einer Ladevorrichtung.

Die Ladevorrichtung dient zum Laden des Akkumulators 5 mit elektrischer Energie. Die Ladevorrichtung ist in den Figuren nicht dargestellt.

Zum elektrischen bzw. elektronischen Verbinden weist die Akku-Schnittstelle 14 einen Pluskontakt, einen Minuskontakt und einen Kommunikationskontakt auf. Der Plus- und Minuskontakt dient zum Erzeugen eines Stromkreises, wenn der Akkumulator 5 mit einer Werkzeugmaschine 1 oder einer Ladevorrichtung verbunden ist. Der Kommunikationskontakt dient zum Senden und Empfangen von Daten sowie Informationen in Form von elektrischen Signalen.

Alternativ oder zusätzlich kann der Akkumulator 5 auch eine Funkkommunikation (z.B. Bluetooth) bzw. drahtlose Kommunikation enthalten.

Die Energiespeicherzellen 13 dienen zum Aufnehmen, Speichern und erneuten Abgeben elektrischer Energie. Die Energiespeicherzellen 13 sind in zylindrischer Form sowie auf Basis einer Lithium-Ionen-Technologie ausgestaltet. Jede Energiespeicherzelle 13 enthält an einem Ende eine Kontakteinrichtung, die zur Übertragung elektrischer Energie dient. Die einzelnen Kontakteinrichtung sind über entsprechende Leitungen mit der Steuerungseinrichtung 15 des Akkumulators 5 verbunden.

Alternativ können die Energiespeicherzellen 13 auch auf einer anderen geeigneten Technologie basieren.

Die zylindrische Form der Energiespeicherzellen 13 ist ebenfalls optional, sodass auch jede andere geeignete Form bzw. Geometrie gewählt werden kann. So ist es insbesondere auch möglich, dass die Energiespeicherzellen 13 als Pouchzellen ausgestaltet sind.

Es ist zudem auch möglich, dass der Akkumulator 5 sowohl zylindrische Energiespeicherzellen 13 als auch Pouch-Zellen enthält. Es ist insbesondere möglich, dass der Akkumulator 5 lediglich eine einzige zylindrische Energiespeicherzelle 13 und eine einzige Pouchzelle enthält.

Die Steuerungseinrichtung 15 regelt und steuert verschiedene Funktionen des Akkumulators 5. Zu den Funktionen gehören unter anderen die Steuerung der Aufnahme und Abgabe von elektrischer Energie in bzw. aus den Energiespeicherzellen 13. Darüber hinaus wird mit Hilfe der Steuerungseinrichtung 15 die Menge an elektrischer Energie gesteuert, die von den Energiespeicherzellen 13 aufgenommen oder abgegeben werden sollen.

Der Antrieb 9 ist in Form eines bürstenlosen Elektromotors ausgestaltet und enthält im Wesentlichen einen Stator 16 und einen Rotor 17.

Der Rotor 17 ist dabei im Inneren des Stators 16 positioniert und zudem drehbar zu dem Stator 16 ausgestaltet. Alternativ kann der Stator auch im Inneren des Rotors positioniert sein, wobei der Rotor weiterhin drehbar zu dem Stator ausgestaltet ist.

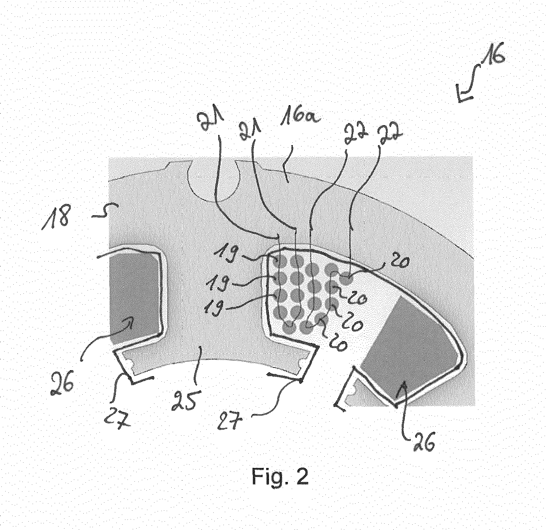

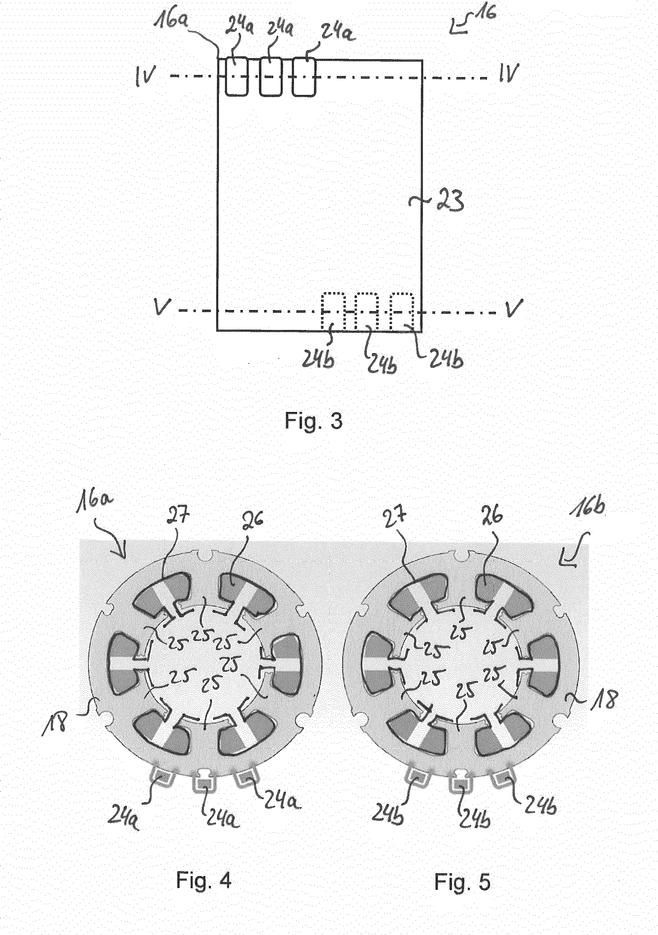

Figur 2 zeigt einen Ausschnitt einer ersten Stirnseite 16a des Stators 16 gemäß einer beispielhaften Ausführungsform. Eine zweite Stirnseite 16b des Stators 16 ist gegenüber der ersten Stirnseite 16a angeordnet (siehe Figur 3).

Der in den Figuren beispielhaft dargestellte Stator 16 enthält dabei ein Blechpaket 18, eine Wickelstütze 27 sowie sechs Spulen 26, die aus mehreren ersten Wicklungen 19 aus einem ersten Wickeldraht 21 und aus mehreren zweiten Wicklungen 20 aus einem zweiten Wickeldraht 22 gebildet sind. Die Spule 26 kann dabei auch als Wickelspule bezeichnet werden. Der in den Figuren gezeigte Elektromotor 9 kann als synchroner Dreiphasenmotor ausgestaltet sein, wobei die Wickeldrähte 21, 22 (auch als Leistungsdrähte bezeichnet) die U-Phase, V-Phase und W-Phase verwirklichen.

Bevorzugt sind die Wickeldrähte 21, 22 durchgehend gewickelt. Das heißt, die Wickeldrähte 21, 22 werden nicht unterbrochen, nachdem eine Spule um einen der Polzähne gewickelt wurde. Besonders vorteilhafterweise können die Drähte 21, 22 derart verlegt werden, dass sich nach Kontaktierung der Drähte mit den ersten Kontaktierungselementen 24a und/oder den zweiten Kontaktierungselementen 24b eine gewünschte Verschaltung der Spulen 26 ohne Zuhilfenahme zusätzlicher Stromschienen bewerkstelligen lässt.

Das Blechpaket 18 besteht im Wesentlichen aus einer Anzahl an übereinander gestapelten Profilblechen. Wie in Figur 2 bzw. 4 und 5 gesehen werden kann, erstrecken sich zu der Mitte des Blechpakets 18 sechs Polzähne 25. Um jeden einzelnen Polzahn 25 ist jeweils der erste und zweite Wickeldraht 21, 22 zur Bildung der Spule 26 gewickelt. An den jeweiligen Enden 16a, 16b des Stators 16 ist jeweils die Wickelstütze 27 zum Stützen bzw. Halten der aus den Wickeldrähten 21, 22 gewickelten Spule 26 angeordnet.

Die Spulen 26 bzw. der erste und zweite Wickeldraht 21, 22 sind mit einem Kunststoff überzogen, der zum Isolieren der Spule 26 dient. Um die Spulen 26 entsprechend mit elektrischer Energie beaufschlagen zu können, müssen die Drähte 21, 22, die eine entsprechende Spule 26 bilden, kontaktiert werden. Dies wird bei dem vorgeschlagenen Elektromotor 9 über Kontaktierungselemente 24 erreicht. Wie in Figur 3 gesehen werden kann, umfasst der Elektromotor 9 drei erste Kontaktierungselemente 24a, die an einer Mantelfläche 23 des Stators 16 im Bereich der ersten Stirnseite 16a angeordnet sind, und drei zweite Kontaktierungselemente 24b, die ebenfalls an der Mantelfläche 23, aber im Bereich der zweiten Stirnseite 16b angeordnet sind.

Diese Kontaktierungselemente 24a, 24b sind dazu ausgebildet, die Drähte, die eine jeweilige Spule 26 bilden, miteinander zu verbinden, wobei die ersten Kontaktierungselemente 24a die Drähte des ersten Wicklungsdrahts 21 kontaktieren und die zweiten Kontaktierungselemente 24a die Drähte des zweiten Wicklungsdrahts 22 kontaktieren. Darüber können die Kontaktierungselemente 24a, 24b als Anschluss für die Stromversorgung bzw. die Versorgung mit elektrischer Energie der Wickeldrähte 21, 22 zum Erzeugen der U-Phase, V-Phase und W-Phase im Betrieb des als Elektromotor ausgebildete Antriebs 9 dienen.

Wie in Figur 3 gesehen werden kann, sind die ersten und zweiten Kontaktierungselemente 24a, 24b separat voneinander an dem Stator 16 angeordnet. Dadurch können die ersten und zweiten Wicklungen 21, 22 der Spule 26 unabhängig voneinander angeschlossen werden. Dies kann ermöglichen, dass für die ersten und zweiten Kontaktierungselemente 24a, 24b die gleichen Bauteile eingesetzt werden können, so dass der Stator 16 mit im Wesentlichen gleichen Bauteilen und/oder Fertigungsprozessen mit einer einfachen Wicklung als auch mit mehrfachen Wicklungen hergestellt werden kann. Das heißt, es ist nicht notwendig spezielle Kontaktierungselemente vorzusehen, die dazu ausgelegt sind, sowohl die ersten Wickeldrähte 21 als auch die zweiten Wickeldrähte 22 gleichzeitig zu kontaktieren.

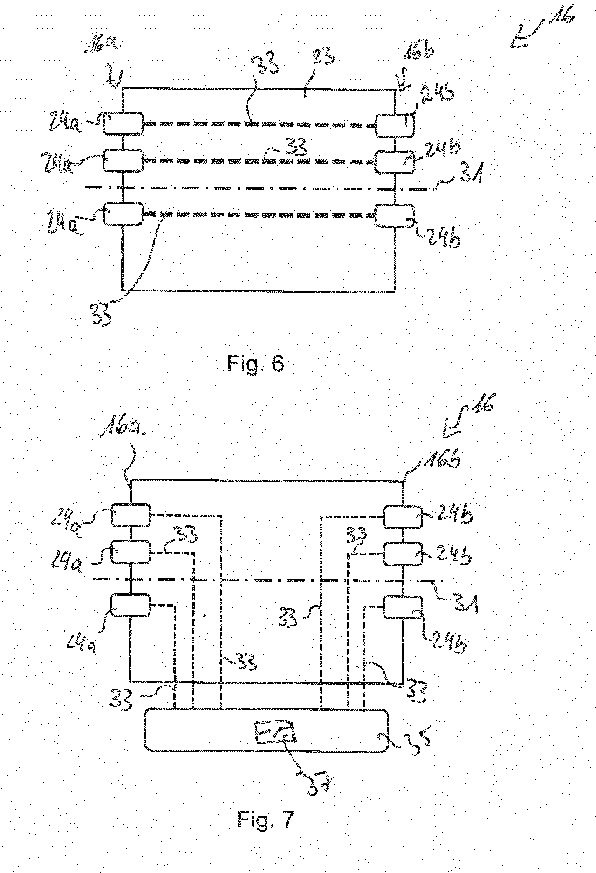

Figur 6 zeigt eine schematische Seitenansicht auf einen Elektromotor 9 gemäß einer zweiten Ausführungsform. Bei der in der Figur 6 gezeigten Ausführungsform sind die ersten und zweiten Kontaktierungselemente 24a, 24b in einer axialen Richtung, die parallel zu einer Drehachse 31 des Rotors 17 verläuft, derart einander gegenüberliegend angeordnet, dass sie sich umfänglich aneinander entsprechenden Positionen befinden. Dies ermöglicht, dass die einander gegenüberliegenden ersten und zweiten Kontaktierungselemente 24a, 24b in einer geraden

Linie direkt miteinander, zum Beispiel mit einem Verbindungselement 33 (angedeutet durch die gestrichelte Linie) verbunden werden können. Das Verbindungselement 33 kann eine Stromschiene, ein Draht, eine Litze oder dergleichen sein.

Insbesondere ist bei der in Figur 6 gezeigten Ausführungsform die erste Wicklung in einem ersten Wickelschema und die zweite Wicklung in einem zweiten Wickelschema ausgeführt, wobei sie sich derart unterscheiden, dass die ersten und zweiten Kontaktierungselemente 24a, 24b auf kürzestem Weg in Längsrichtung parallel zur Drehachse 31 elektrisch verbunden werden können.

Beispielsweise kann das erste und zweite Wickelschema so gewählt sein, dass sich eine elektrische Parallelschaltung der ersten Spule mit der zweiten Spule oder eine elektrische Serienschaltung der ersten Spule mit der zweiten Spule ergibt.

Figur 7 zeigt eine schematische Seitenansicht auf einen Elektromotor 9 gemäß einer dritten Ausführungsform. Der in der Figur 7 gezeigte Elektromotor 9 gemäß der dritten Ausführungsform unterscheidet sich von dem in der Figur 6 gezeigten Elektromotor 9 gemäß der zweiten Ausführungsform dadurch, dass die Verbindungselemente 33 die ersten und zweiten Kontaktierungselemente 24a, 24b mit einer Leistungselektronik 35 verbinden.

Die Leistungselektronik 35 ist insbesondere dazu ausgebildet, die jeweiligen Wickeldrähte 21, 22 mit Strom zu beaufschlagen. Des Weiteren kann ein Schaltelement 37 vorgesehen sein, das dazu eingerichtet ist, zwischen einer Parallelschaltung und einer Serienschaltung der ersten und zweiten Wicklungen 21, 22 umzuschalten. Dies kann je nach Schaltzustand ermöglichen, einen effektiven Leiterquerschnitt der ersten und zweiten Spule bei gleichbleibender effektiver Windungszahl zu verdoppeln oder eine effektive Windungszahl der ersten und zweiten Spule bei gleichbleibendem effektiven Leiterquerschnitt zu verdoppeln. Das Schaltelement 37 kann in der Leistungselektronik integriert oder separat vorgesehen sein.

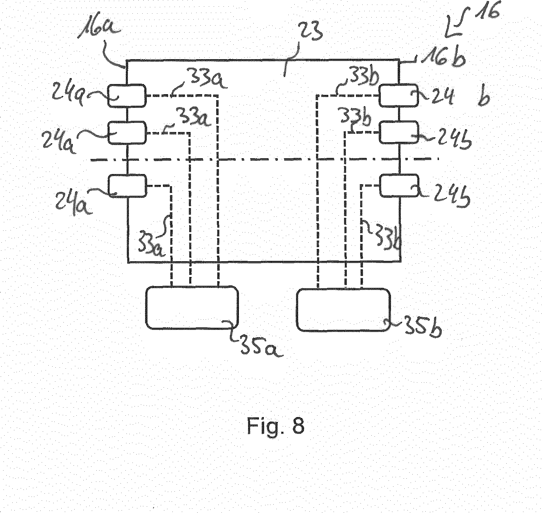

Figur 8 zeigt eine schematische Seitenansicht auf einen Elektromotor 9 gemäß einer vierten Ausführungsform. Der in der Figur 8 gezeigte Elektromotor 9 gemäß der vierten Ausführungsform unterscheidet sich von dem in der Figur 7 gezeigten Elektromotor 9 gemäß der dritten Ausführungsform dadurch, dass erste Verbindungselemente 33a die ersten Kontaktierungselemente 24a mit einer ersten Leistungselektronik 35a und zweite

Verbindungselemente 33b die zweiten Kontaktierungselemente 24b mit einer zweiten Leistungselektronik 35b verbinden, die verschieden von der ersten Leistungselektronik 35a ist.

In den dargestellten Ausführungsformen sind jeweils drei erste bzw. zweite Kontaktierungselemente 24a, 24b dargestellt. Es ist jedoch auch vorstellbar, dass sich die Anzahl von ersten und zweiten Kontaktierungselementen 24a, 24b unterscheidet. Auch ist es möglich, dass der vorgeschlagene Elektromotor 9 eins, zwei, vier oder auch sechs Kontaktierungselemente 24a, 24 b aufweist.

Zusammenfassend ermöglicht der vorgeschlagene Elektromotor neben der Vermeidung der genannten Nachteile aus dem Stand der Technik ein hohes Maß an Flexibilität hinsichtlich der Verschaltung einer ersten und zweiten Wicklung 19, 20 sowie deren Ansteuerung mittels ein oder mehrerer Leistungselektroniken.

Eine Ausführung des Stators mit Mehrfach- bzw. Doppelwicklungen kann mit den gleichen Bauteilen wie eine Ausführung des Stators mit einer Einfachwicklung erreicht werden. Dies ermöglicht ein modulares Statordesign. Durch die separate Kontaktierung der ersten und zweiten Wicklung kann insbesondere erreicht werden, dass Drähte mit einem größeren Querschnitt auch für Mehrfachwicklungen eingesetzt werden können, da die Drähte für die erste und zweite Wicklung in separaten Kontaktierungselementen kontaktiert werden.

### Bezugszeichenliste

- 1: Werkzeugmaschine
- 2: Gehäuse
- 2a: vorderes Ende
- 2b: hinteres Ende
- 2c: oberes Ende
- 2d: unteres Ende
- 3: Handgriff
- 3a: erstes Ende
- 3b: zweites Ende
- 4: Werkzeugaufnahme
- 5: Energieversorgung
- 6: Werkzeug
- 7: Akku-Schnittstelle
- 8: Aktivierungsschalter
- 9: Elektromotor
- 10: Getriebevorrichtung
- 11: Antriebswelle
- 12: Steuerungseinrichtung
- 13: Energiespeicherzellen
- 14: Akku-Schnittstelle
- 15: Steuerungseinrichtung
- 16: Stator
- 16a: erstes Ende
- 16b: zweites Ende
- 17: Rotor
- 18: Blechpaket
- 19: erste Wicklung
- 20: zweite Wicklung
- 21: Wickeldraht
- 22: Wickeldraht
- 23: Mantelfläche
- 24a: erstes Kontaktierungselement
- 24b: zweites Kontaktierungselement
- 25: Polzahn
- 26: Spule
- 27: Wickelstütze
- 31: Drehachse
- 33: Verbindungselement
- 35: Leistungselektronik
- 37: Schaltelement
- 40: Akku-Gehäuse
- 40a: Deckelement
- 40b: Seitenwand
- 40c: Bodenelement
- 41: Leitungen

## Patentansprüche

1. Elektromotor (9), insbesondere für eine Werkzeugmaschine (1), wobei der Elektromotor (9) einen Stator (16) und einen um eine Drehachse (31) drehbaren Rotor (17) aufweist, wobei der Stator (16) eine erste und eine zweite Stirnseite (16a, 16b) und mehrere Polzähne (25) aufweist, wobei jeder der Polzähne (25) dazu ausgebildet ist, zumindest eine erste Wicklung (19) zur Bildung einer ersten Spule (26) und zumindest eine zweite Wicklung (20) zur Bildung einer zweiten Spule (26) aufzunehmen, wobei zumindest ein erstes Kontaktierungselement (24a) zum Kontaktieren der zumindest einen ersten Wicklung (19) und zumindest ein zweites Kontaktierungselement (24b) zum Kontaktieren der zumindest einen zweiten Wicklung (20) vorgesehen ist, wobei das zumindest eine erste Kontaktierungselement (24a) und das zumindest eine zweite Kontaktierungselement (24b) separat voneinander an dem Stator (16) angeordnet sind.

2. Elektromotor (9) nach Anspruch 1, wobei das zumindest eine erste Kontaktierungselement (24a) im Bereich der ersten Stirnseite (16a) des Stators (16) und das zumindest eine zweite Kontaktierungselement (24b) im Bereich der zweiten Stirnseite (16b) des Stators (16) angeordnet ist.

3. Elektromotor (9) nach Anspruch 1 oder 2, wobei das zumindest eine erste Kontaktierungselement (24a) und/oder das zumindest eine zweite Kontaktierungselement (24b) an einer Mantelfläche (23) des Stators (16) angeordnet sind.

4. Elektromotor (9) nach einem der vorherigen Ansprüche, wobei das zumindest eine erste Kontaktierungselement (24a) und das zumindest eine zweite Kontaktierungselement (24b) in einer axialen Richtung derart einander gegenüberliegend angeordnet sind, dass sie sich an umfänglich entsprechenden Positionen befinden.

5. Elektromotor (9) nach einem der vorherigen Ansprüche, wobei die erste Wicklung (19) und/oder die zweite Wicklung (20) durch einen einzelnen zusammenhängenden elektrisch leitenden Draht (21, 22) gebildet ist.

6. Elektromotor (9) nach einem der vorherigen Ansprüche, wobei die erste Wicklung (19) ein erstes Wickelschema und die zweite Wicklung (20) ein zweites Wickelschema aufweist, wobei das erste Wickelschema gleich oder verschieden zum zweiten Wickelschema ist.

7. Elektromotor (9) nach einem der vorherigen Ansprüche, wobei das zumindest eine erste Kontaktierungselement (24a) mittels eines ersten Verbindungselements (33a) elektrisch mit einer ersten Leistungselektronik (35a) verbunden ist und/oder das zumindest eine zweite Kontaktierungselement (24b) mittels eines zweiten Verbindungselements (33b) elektrisch mit einer zweiten Leistungselektronik (35b) verbunden ist.

8. Elektromotor (9) nach Anspruch 7, wobei die erste und die zweite Leistungselektronik (35a, 35b) gleich oder verschieden sind.

9. Elektromotor (9) nach einem der vorherigen Ansprüche, wobei das zumindest eine erste Kontaktierungselement (24a) und das zumindest eine zweite Kontaktierungselement (24b) elektrisch derart miteinander verbunden sind, dass sich eine elektrische Parallelschaltung der ersten Spule (26) mit der zweiten Spule (26) oder eine elektrische Serienschaltung der ersten Spule (26) mit der zweiten Spule (26) ergibt.

10. Werkzeugmaschine (1) mit einem Elektromotor (9) nach einem der vorhergehenden Ansprüche.

11. Werkzeugmaschine (1) nach Anspruch 10, wobei die Werkzeugmaschine (1) lösbar mit einer Energieversorgungsvorrichtung (5) verbindbar ist, wobei die Energieversorgungsvorrichtung (5) dazu eingerichtet ist, die Werkzeugmaschine (1) mit elektrischer Energie zu versorgen.
